# EUROPEAN PATENT SPECIFICATION

(11) **EP 2 718 130 B1**
(45) Date of publication and mention of the grant of the patent: **08.08.2018**
(21) Application number: 12796288.4
(22) Date of filing: 05.06.2012
(51) Int. Cl.: B60H 1/00, B60L 11/18, F25B 47/02, B60H 1/32, F25D 21/06

(54) **AIR CONDITIONER IN ELECTRIC VEHICLE**
KLIMAANLAGE IN EINEM ELEKTROFAHRZEUG
CLIMATISEUR DANS UN VÉHICULE ÉLECTRIQUE

(30) Priority: 10.06.2011 KR 20110056423; 30.04.2012 KR 20120045397
(43) Date of publication of application: 16.04.2014
(73) Proprietor: LG Electronics Inc., Seoul 150-721 (KR)
(72) Inventor: CHOI, Inho, Seoul 153-802 (KR); PARK, Keunseo, Seoul 153-802 (KR); KIM, Kyunghwan, Seoul 153-802 (KR)
(74) Representative: Vossius & Partner Patentanwälte Rechtsanwälte mbB
(86) International application number: PCT/KR2012/004430
(87) International publication number: WO 2012/169764

(56) References cited:
- JP-A- H0 858 356
- JP-A- H0 858 356
- JP-A- 2002 188 873
- JP-A- 2002 188 873
- JP-A- 2010 254 291
- JP-A- 2010 254 291
- KR-A- 20100 110 423
- KR-A- 20100 110 423

## Description

### Technical Field

The present invention relates to an air conditioner in an electric vehicle, and more particularly to an air conditioner in an electric vehicle, which can make continuous heating operation even in defrosting operation, can enhance heating efficiency and performance even in the defrosting operation, and can recover heat discharged from various components of the electric vehicle even in the defrosting operation for preventing liquid refrigerant from being introduced to a compressor.

### Background Art

According to recent global environmental regulation strengthening and energy cost reducing trend, demands on environment friendly EV (Electric Vehicle) is increasing. The USA and the Europe are in a state in which supply of the electric vehicle is obliged by legislation of the clean air act, and interest in, and research on, green car is active in the Korea as a part of low carbon green growth activity, too.

The electric vehicle is provided with a motor for driving the vehicle, a battery mounted thereto for operating various electric units, and an air conditioner for cooling in summer and heating in winter.

The air conditioner has a cycle in which refrigerant which circulates an inside thereof in an order of compression, condensation, expansion and evaporation for transfer of heat. Owing to the cycle, the air conditioner is operated in a cooling cycle for discharging the heat from a room to an outside of the room in summer, and in a heating cycle of a heat pump opposite to the cooling cycle in which the heat is supplied to the room in winter.

In the meantime, if the air conditioner is operated in a heating cycle in winter, the refrigerant is vaporized as a heat exchanger in an outdoor unit absorbs the heat, and the refrigerant is condensed as a heat exchanger in an indoor unit discharges the heat. In the meantime, if the air conditioner is operated in the heating cycle, since frost is formed on a surface of the outdoor unit heat exchanger due to a surface temperature thereof which becomes lower significantly as the outdoor unit absorbs the heat, the heat exchange efficiency of the heat exchanger becomes poorer.

Though a technology has been used in a related art, in which heat being discharged from an engine is used for removal of the frost from the surface of the heat exchanger, the electric vehicle has a problem in that the heat discharged from the engine can not be utilized.

Moreover, as a method for removal of the frost from the surface of the outdoor unit heat exchanger, there is a defrosting operation method in which the circulation of the refrigerant is reversed in middle of the heating cycle to operate the refrigerating cycle in the cooling cycle. That is, if the refrigerating cycle is changed to the cooling cycle in middle of the heating cycle, the refrigerant is condensed at the outdoor heat exchanger to discharge the heat, and the heat discharged thus removes the frost from the surface of the outdoor heat exchanger.

However, if the refrigerating cycle is operated reversely, there is a problem in that a room temperature of the electric vehicle drops in the defrosting operation. KR 2010 0110423 A discloses an air conditioner according to the preamble of claim 1.

### Disclosure of Invention

### Technical Problem

Accordingly, the present invention is directed to an air conditioner in an electric vehicle.

An object of the present invention is to provide an air conditioner in an electric vehicle, which can make continuous heating operation even in defrosting operation.

Another object of the present invention is to provide an air conditioner in an electric vehicle, which can recover heat discharged from various components of the electric vehicle even in defrosting operation for preventing liquid refrigerant from being introduced to a compressor.

Another object of the present invention is to provide an air conditioner in an electric vehicle, which can enhance heating efficiency and performance even in defrosting operation.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Solution to Problem

To achieve these objects and other advantages and in accordance with the purpose of the invention, as embodied and broadly described herein, an air conditioner in an electric vehicle having a battery and a driving unit includes a compressor for compressing refrigerant, an indoor heat exchanger for introducing the refrigerant thereto from the compressor in heating operation, first and second outdoor heat exchangers connected to the indoor heat exchanger, first and second refrigerant flow passage controllers provided between the indoor heat exchanger and each of the outdoor heat exchangers, and a controller for making defrosting operation of the first outdoor heat exchanger if the first outdoor heat exchanger meets at least one of defrosting operation starting conditions of an outdoor temperature, and refrigerant temperatures at an inlet and an outlet of the outdoor heat exchanger in the heating operation, and controlling the first and second refrigerant flow passage controllers for making the refrigerant passed through the indoor heat exchanger to be introduced only to the second outdoor heat exchanger according to a state of remained charge of the battery or the outdoor temperature.

### Advantageous Effects of Invention

As has been described, the air conditioner in an electric vehicle related to a preferred embodiment of the present invention can make continuous heating operation even in defrosting operation.

And, the air conditioner in an electric vehicle related to a preferred embodiment of the present invention can recover the heat discharged from various components of the electric vehicle even in defrosting operation for preventing liquid refrigerant from being introduced to the compressor.

And, the air conditioner in an electric vehicle related to a preferred embodiment of the present invention can enhance heating efficiency and performance in defrosting operation.

It is to be understood that both the foregoing general description and the following detailed description of the present invention are exemplary and explanatory and are intended to provide further explanation of the invention as claimed.

### Brief Description of Drawings

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 illustrates a block diagram of an air conditioner in an electric vehicle related to a first preferred embodiment of the present invention.
FIG. 2 illustrates a component block diagram of an air conditioner in an electric vehicle related to a first preferred embodiment of the present invention.
FIGS. 3 and 4 illustrate block diagrams each for describing an operation state of an air conditioner in an electric vehicle related to a first preferred embodiment of the present invention.
FIG. 5 illustrates a conceptual drawing of a refrigerant heater in an air conditioner in an electric vehicle related to a preferred embodiment of the present invention.
FIGS. 6 and 7 illustrate block diagrams each for describing a discharged heat recovery unit in air conditioner in an electric vehicle related to the present invention.
FIG. 8 illustrates a block diagram of an air conditioner in an electric vehicle related to a second preferred embodiment of the present invention.
FIG. 9 illustrates a block diagram of an air conditioner in an electric vehicle related to a third preferred embodiment of the present invention.
FIG. 10 illustrates a block diagram of an air conditioner in an electric vehicle related to a fourth preferred embodiment of the present invention.
FIG. 11 illustrates a block diagram of an air conditioner in an electric vehicle related to a fifth preferred embodiment of the present invention.

### Best Mode for Carrying out the Invention

An air conditioner in an electric vehicle (Hereafter an air conditioner) related to a first preferred embodiment of the present invention will be described with reference to the attached drawings, in detail. The attached drawings are in illustrative exemplary modes of the present invention, which are provided for describing the present invention in more detail, but not for confining technical scopes of the present invention.

Wherever possible, the same reference numbers will be used throughout the drawings to refer to the same or like parts, repetitive description of which will be omitted, and, for convenience of description, a size or a shape of a member may be shown exaggerated or not to scale, perfectly.

In the meantime, though terms including ordinal numbers, such as first or second, can be used for describing various elements, the elements are not confined by the terms, and, but are used only for making one element distinctive from other elements.

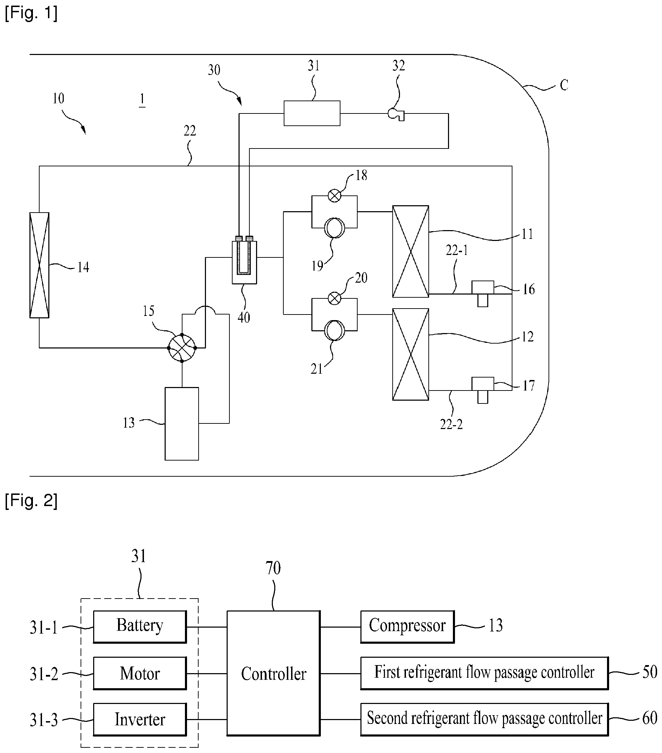

FIG. 1 illustrates a block diagram of an air conditioner in an electric vehicle related to a first preferred embodiment of the present invention, and FIG. 2 illustrates a component block diagram of an air conditioner in an electric vehicle related to a first preferred embodiment of the present invention.

The air conditioner 1 in an electric vehicle related to a first preferred embodiment of the present invention is related to an air conditioner 1 in an electric vehicle including a battery 13-1 and a driving unit.

The air conditioner 1 includes a compressor 13 for compressing refrigerant, an indoor heat exchanger 14 for introducing refrigerant thereto from the compressor 13 in heating operation, first and second outdoor heat exchangers 11 and 12 connected to the indoor heat exchanger 14, first and second refrigerant flow passage controllers 50 and 60 provided between the indoor heat exchanger 14 and each of the outdoor heat exchangers 11 and 12, and a controller 70 for making defrosting operation of the first outdoor heat exchanger 11 if the first outdoor heat exchanger 11 meets at least one of defrosting operation starting conditions of an outdoor temperature, and refrigerant temperatures at an inlet and an outlet of the outdoor heat exchanger in the heating operation, and controlling the first and second refrigerant flow passage controllers 50 and 60 for making the refrigerant passed through the indoor heat exchanger to be introduced only to the second outdoor heat exchanger 12 according to a state of remained charge of the battery or the outdoor temperature.

In this instance, the controller 70 may finish the defrosting operation of the first outdoor heat exchanger 11 if the outlet side refrigerant temperature of the first outdoor heat exchanger 11 of which defrosting operation is being performed is higher than a set temperature.

And, the controller 70 may perform defrosting of the second outdoor heat exchanger 12 in succession if the defrosting operation of the first outdoor heat exchanger 11 is finished, and control the first and second refrigerant flow passage controllers 50 and 60 for making the refrigerant passed through the indoor heat exchanger to be introduced only to the first outdoor heat exchanger 11 according to the state of remained charge of the battery or the outdoor temperature.

Different from this, if the second outdoor heat exchanger 12 does not meet the defrosting operation starting conditions after finishing the defrosting operation of the first outdoor heat exchanger 11, the controller 70 may control the first and second refrigerant flow passage controllers 50 and 60 for controlling flow rates of the refrigerant being introduced to the first and second outdoor heat exchangers 11 and 12 according to the state of remained charge of the battery or the outdoor temperature.

Referring to FIG. 1, the air conditioner 1 related to the first preferred embodiment of the present invention includes an air conditioning unit 10 for cooling or heating a room space of the electric vehicle C, a discharge heat recovery unit 30 having a working fluid for circulating a heat generation source 31 related to a driving unit of the electric vehicle to recover the discharged heat, and a refrigerant heater 40 for heating refrigerant circulating the air conditioning unit 10.

The air conditioning unit 10 includes the first outdoor heat exchanger 11, the second outdoor heat exchanger 12, the compressor 13, and the indoor heat exchanger 14. And, the air conditioning unit 10 may include a four-way valve 15 for change-over of a refrigerant flow passage to make the air conditioning unit 10 to be operated in the cooling cycle for the cooling operation and to be operated as the heat pump for the heating operation.

If the air conditioning unit 10 is operated as the heat pump which heats the room space, vaporization of the refrigerant takes place at the first and second outdoor heat exchangers 11 and 12 as heat exchange between cold outdoor air and the refrigerant takes place at the first and second outdoor heat exchangers 11 and 12, and condensation of the refrigerant takes place at the indoor heat exchanger 14 as heat exchange between the room air and the refrigerant takes place at the indoor heat exchanger 14. That is, the refrigerant receives the heat from the outdoor air in a course the refrigerant passes through the first and second outdoor heat exchangers, and transfers the heat to the room air in a course the refrigerant passes through the indoor heat exchanger.

A refrigerant flow path of the refrigerant circulating through the air conditioning unit 10 will be described in more detail. The refrigerant discharged from the compressor 13 passes through the indoor heat exchanger 14, and the refrigerant having heat exchanged thus at the indoor heat exchanger 14 is introduced to the first and second outdoor heat exchangers 11 and 12.

And, the refrigerant discharged from the first and second outdoor heat exchangers 11 and 12 is introduced to the refrigerant heater 40, and the refrigerant discharged from the refrigerant heater 40 is introduced to the compressor 13.

In the meantime, a first electronic expansion valve 16 is mounted on a refrigerant pipeline connected between the indoor heat exchanger 14 and the first outdoor heat exchanger 11, and a second electronic expansion valve 17 is mounted on a refrigerant pipeline connected between the indoor heat exchanger 14 and the second outdoor heat exchanger 12.

In this instance, the first electronic expansion valve 16 construes the first refrigerant flow passage controller 50, and the second electronic expansion valve 17 construes the second refrigerant flow passage controller 60.

The first refrigerant flow passage controller 50 and the second refrigerant flow passage controller 60 may include at least one electronic expansion valve, and may include a solenoid valve and a check vale for controlling a flow passage or flow rates of the refrigerant being introduced to the first and second outdoor heat exchangers 11 and 12 as a case demands, additionally.

The first refrigerant flow passage controller 50 and the second refrigerant flow passage controller 60 may be configured in a variety of ways based on a number of pipelines and a number of valves through which the refrigerant flows. The first and second refrigerant flow passage controllers 50 and 60 related to the first embodiment will be described in detail.

The first outdoor heat exchanger 11 and the second outdoor heat exchanger 12 may be connected to the indoor heat exchanger 14 in parallel, and the refrigerant pipeline 22 connected to the indoor heat exchanger 14 is branched to the first and second outdoor heat exchangers 11 and 12, and the first branch pipe 22-1 and the second branch pipe 22-2 may have the first and second electronic expansion valves 16 and 17 mounted thereto, respectively.

And, there may be a first solenoid valve 18 and a first expansion valve 19 provided in parallel between the first outdoor heat exchanger 11 and the refrigerant heater 40. That is, the refrigerant discharged from the first outdoor heat exchanger 11 may be introduced to the refrigerant heater 40 passed through the first solenoid valve 18 in a state the first solenoid valve 18 is opened, and may be introduced to the refrigerant heater 40 passed through the first expansion valve 19 in a state the first solenoid valve 18 is closed.

And, there may be a second solenoid valve 20 and a second expansion valve 21 connected in parallel between the second outdoor heat exchanger 12 and the refrigerant heater 40. That is, the refrigerant discharged from the second outdoor heat exchanger 12 is introduced to the refrigerant heater 40 passed through the second solenoid valve 20 in a state the second solenoid valve 20 is opened, and is introduced to the refrigerant heater 40 passed through the second expansion valve 21 in a state the second solenoid valve 20 is closed.

And, the controller 70 can control openings of the first and second electronic expansion valves 16 and 17, and the first and second solenoid valves 18 and 19, and openings of the first and second expansion valves 19 and 21. In the first embodiment, the first refrigerant flow passage controller 50 may include the first electronic expansion valve 16, the first solenoid valve 18, and the first expansion valve 19, and the second refrigerant flow passage controller 60 may include the second electronic expansion valve 17, the second solenoid valve 20, and the second expansion valve 21.

In the meantime, the first and second outdoor heat exchangers 11 and 12 have surface temperatures dropped significantly in a course the first and second outdoor heat exchangers 11 and 12 absorb the heat from the outdoor air, to form frost on the surface of the first and second outdoor heat exchangers 11 and 12 due to the surface temperatures dropped thus, thereby causing a problem of making efficiency of the outdoor heat exchangers 11 and 12 poor.

In order to remove the frost, the air conditioning unit 10 may perform the defrosting operation. A defrosting process of the first and second outdoor heat exchangers 11 and 12 will be described with reference to the attached drawings, in detail.

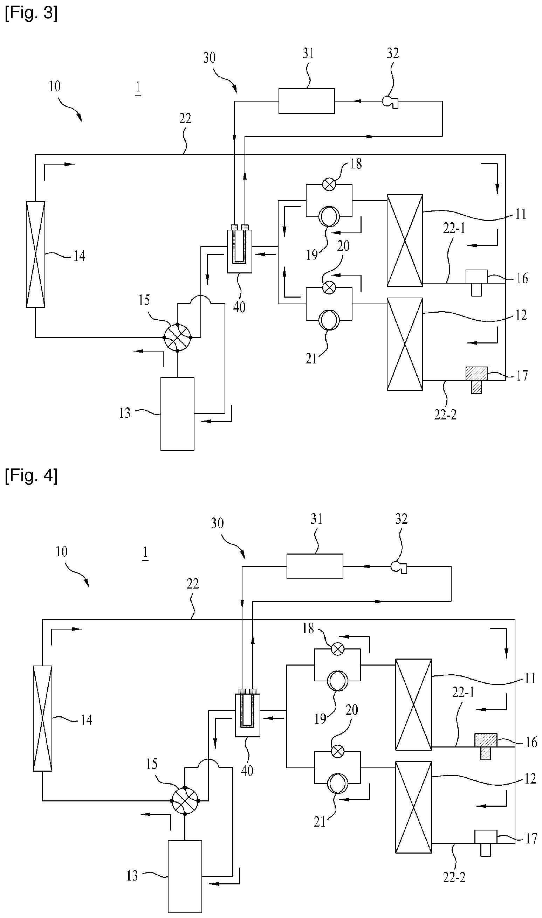

FIGS. 3 and 4 illustrate block diagrams each for describing an operation state of an air conditioner in an electric vehicle related to a first preferred embodiment of the present invention.

The controller 70 determines whether one of the outdoor heat exchangers 11 and 12 meets the defrosting operation starting condition or not. The defrosting operation starting condition may include at least one of the outdoor temperature, a compressor operation time period, a heating load, the inlet refrigerant temperature and the outlet refrigerant temperature of the outdoor heat exchanger.

As one mode of the embodiment, the controller 70 may determine whether the defrosting operation starting condition is met or not by measuring the refrigerant temperature passed through the outdoor heat exchangers 11 and 12, and comparing the measured value to a value measured in regular operation in advance, and the controller 70 may finish the defrosting operation of a relevant outdoor heat exchanger 11 or 12 if the outlet side refrigerant temperature of the outdoor heat exchanger of which defrosting operation is being performed is higher than a set temperature.

An alternated defrosting process of the first outdoor heat exchanger 11 and the second outdoor heat exchanger 12 in the air conditioner 1 related to the first embodiment will be described with reference to the attached drawing, in detail.

In the meantime, as described before, if the second outdoor heat exchanger 12 does not meet the defrosting operation starting condition even after the defrosting operation of the first outdoor heat exchanger 11 is finished as the first outdoor heat exchanger 11 meets the defrosting operation starting condition, the alternated defrosting operation is not made, but a general heating operation may be performed, when the controller 70 controls the flow rate of the refrigerant being introduced to the first and second outdoor heat exchangers 11 and 12 according to the state of remained charge of the battery or the outdoor temperature, and may perform the heating operation.

At first, a process for operating the first outdoor heat exchanger 11 as a condenser for defrosting the first outdoor heat exchanger 11, and for operating the second outdoor heat exchanger 12 as an evaporator for making continuous heating in the defrosting process.

Referring to FIG. 3, the controller 70 (See FIG. 2) opens the first electronic expansion valve 16 connected to the first outdoor heat exchanger 11, and closes the first solenoid valve 18. The refrigerant condensed in a course the refrigerant passes through the indoor heat exchanger 14 does not expand in a course the refrigerant passes through the first electronic expansion valve 16, but condenses in a course the refrigerant passes through the first outdoor heat exchanger 11.

Therefore, the first outdoor heat exchanger 11 is operated as a condenser like the indoor heat exchanger 14, to make the defrosting of the first outdoor heat exchanger 11. In the meantime, the refrigerant discharged from the first outdoor heat exchanger 11 expands in a course the refrigerant passes through the first expansion valve 19, and is introduced to the refrigerant heater 40.

At the same time with this, the controller 70 controls opening of the second electronic expansion valve 17 connected to the second outdoor heat exchanger 12, and opens the second solenoid valve 20. The refrigerant condensed in a course of passing through the indoor heat exchanger 14 expands in a course of passing through the second electronic expansion valve 17, and vaporizes in a course of passing through the second outdoor heat exchanger 12.

Therefore, different from the first outdoor heat exchanger 11, the second outdoor heat exchanger 12 is operated as an evaporator, and the refrigerant discharged from the second outdoor heat exchanger 12 is introduced to the refrigerant heater 40 after passing through the second solenoid valve 20.

In this instance, since the refrigerant discharged from the first outdoor heat exchanger 11 is not vaporized, the refrigerant is required to vaporize before being introduced to the compressor 13. The refrigerant may vaporize in a course of passing through the refrigerant heater 40.

Thus, since the second outdoor heat exchanger 12 is operated as an evaporator even during the defrosting of the first outdoor heat exchanger 11, the room space can be heated, continuously.

A process will be described, for operating the second outdoor heat exchanger 12 as a condenser for defrosting the second outdoor heat exchanger 12, and for operating the first outdoor heat exchanger 11 as an evaporator for making continuous heating in the defrosting process.

Referring to FIG. 4, the controller 70 (See FIG. 2) opens the second electronic expansion valve 17 connected to the second outdoor heat exchanger 12, and closes the second solenoid valve 20. The refrigerant condensed in a course the refrigerant passes through the indoor heat exchanger 14 does not expand in a course the refrigerant passes through the second electronic expansion valve 17, but condenses in a course the refrigerant passes through the second outdoor heat exchanger 12.

Therefore, the second outdoor heat exchanger 12 is operated as a condenser like the indoor heat exchanger 14, to make the defrosting of the second outdoor heat exchanger 12. In the meantime, the refrigerant discharged from the second outdoor heat exchanger 12 expands in a course the refrigerant passes through the second expansion valve 21, and is introduced to the refrigerant heater 40.

At the same time with this, the controller 70 controls opening of the first electronic expansion valve 16 connected to the first outdoor heat exchanger 11, and opens the first solenoid valve 18. The refrigerant condensed in a course of passing through the indoor heat exchanger 14 expands in a course of passing through the first electronic expansion valve 16, and vaporizes in a course of passing through the first outdoor heat exchanger 11.

Therefore, different from the second outdoor heat exchanger 12, the first outdoor heat exchanger 11 is operated as an evaporator, and the refrigerant discharged from the first outdoor heat exchanger 11 is introduced to the refrigerant heater 40 after passing through the first solenoid valve 18.

In this instance, since the refrigerant discharged from the second outdoor heat exchanger 12 is not vaporized, the refrigerant is required to vaporize before being introduced to the compressor 13. The refrigerant may vaporize in a course of passing through the refrigerant heater 40.

Thus, since the first outdoor heat exchanger 11 is operated as an evaporator even during the defrosting of the second outdoor heat exchanger 12, the room space can be heated, continuously.

For the defrosting operation of the first outdoor heat exchanger 11 and the second outdoor heat exchanger 12, the controller 70 can determine whether the frost is formed or not by measuring evaporation temperatures of the outdoor heat exchangers 11 and 12. Or, the controller can determine whether the frost is formed or not by measuring an operation time period of the compressor, and an algorithm for the defrosting operation can be determined in a variety of ways taking at least one of the evaporation temperature and an operation time period of the compressor into account.

And, the first outdoor heat exchanger 11 and the second outdoor heat exchanger 12 may be arranged on a front side of the electric car, side by side in a vertical direction. In this case, the second outdoor heat exchanger 12 close to a road surface may be defrosted at first.

In the meantime, the refrigerant heater 40 may have a chamber of a predetermined volume through which the refrigerant and a working fluid for heating the refrigerant to pass.

The refrigerant heater 40 and the discharged heat recovery unit 30 will be described with reference to the attached drawings, in detail.

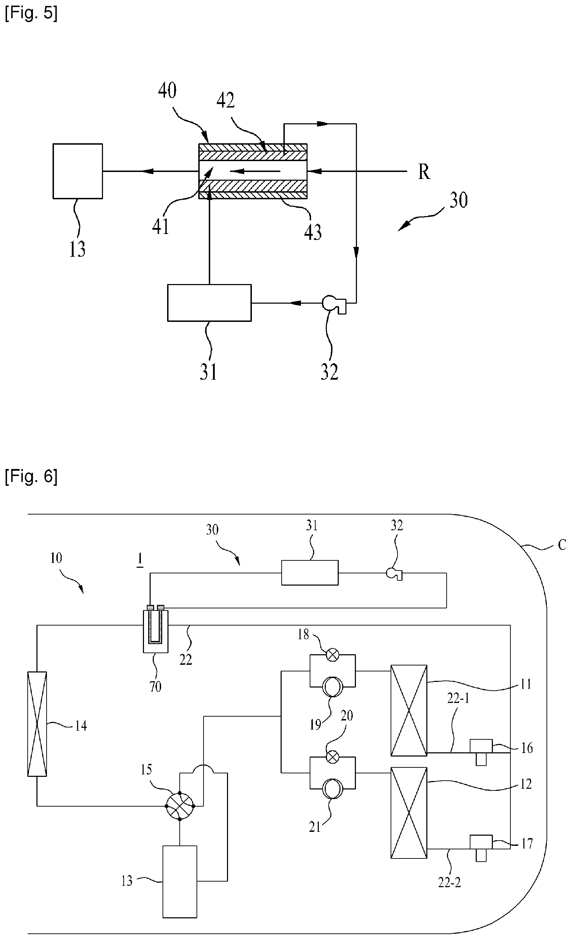

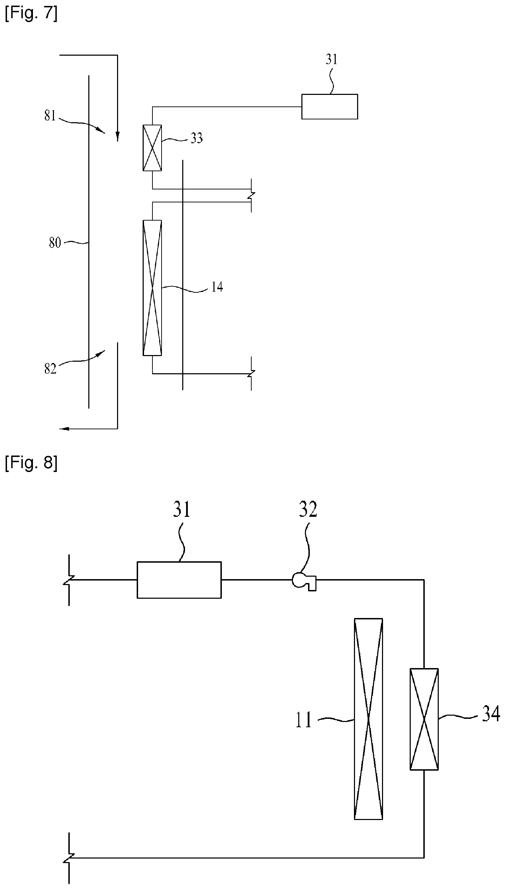

FIG. 5 illustrates a conceptual drawing of a refrigerant heater 40 in an air conditioner in an electric vehicle related to a preferred embodiment of the present invention, and FIGS. 6 and 7 illustrate block diagrams each for describing a discharged heat recovery unit 30 in air conditioner in an electric vehicle related to the present invention.

The electric vehicle may have a motor 31-2 for driving the electric vehicle, a battery 31-1 for charging electricity therein, a converter (Not shown), and an inverter 331-3 (Not shown) provided thereto.

In a process of operation of the electric vehicle, heat is generated from the motor 31-2, the inverter 31-3 and the battery 31-1, and the discharged heat recovery unit 30 may include a heat generation unit 31 including at least one of the motor, the converter, the inverter, and the battery, a working fluid for circulating the heat generation source 31 to recover the heat from the heat generation source 31, and a pump 32 for circulating the working fluid.

As one mode of the embodiment, in order to construe the discharged heat recovery unit 30, the motor 31-2, the converter, and the inverter 31-3 may be arranged in series along a circulating course of the working fluid, for the working fluid to have a temperature which is elevated in a course of passing through the heat generation source 31.

Referring to FIG. 5, provided therein the refrigerant heater 40, there may be a flow passage for passing the refrigerant R therethrough, and a flow passage for passing the working fluid (For an example, cooling water) therethrough.

And, the refrigerant heater 40 may have a double pipe structure such that the refrigerant R flows through an inner pipe and the working fluid flows through an outer pipe. Or, different from this, the working fluid may flow through the inner pipe, and the refrigerant R may flow through the outer pipe.

Therefore, in a course the refrigerant and the working fluid pass through the refrigerant heater 40 respectively, the heat transfers from the working fluid to the refrigerant, to heat the refrigerant before the refrigerant is introduced to the compressor 13.

In the meantime, for a case in which heating of the refrigerant is not adequate only with the heat recovered from the heat generation source 31, the refrigerant heater 40 may include a heater 43 for heating the refrigerant, and the heater may be an induction heater.

In the meantime, the discharged heat recovery unit 30 may include a heat accumulator (Not shown) for storage of the discharged heat recovered from the heat generation source 31, additionally. The heat accumulator may have a phase change material PCM provided therein for storage of an amount of heat by heat exchange with the working fluid.

The heat stored in the phase change material may heat the refrigerant together with the heat recovered from the heat generation source 31 at the time of the defrosting operation of the air conditioning unit 10.

In comparison to general heating operation in which the room space of the electric vehicle is heated with the two outdoor heat exchangers 11 and 12, the heating performance becomes poorer in the defrosting operation due to heating of the room space with one of the outdoor heat exchangers. In this instance, if a temperature of the refrigerant being introduced to the compressor 13 is elevated with the refrigerant heater 40, to elevate an air blow out temperature from the indoor heat exchanger 14, the heating performance can be made higher.

In the meantime, since heating of the refrigerant with the refrigerant heater 40 is required only in the defrosting operation of the first or second outdoor heat exchanger 11 or 12, the controller 70 may put the pump 32 of the discharged heat recovery unit 30 only in the defrosting operation of one of the outdoor heat exchangers 11 and 12, thereby increasing a time period use of the battery 31-1.

Referring to FIG. 6, the discharged heat recovery unit 30 may include a supplementary indoor heat exchanger 33 connected to make the working fluid having the discharged heat recovered from the heat generation source flow therethrough.

The supplementary indoor heat exchanger 33 may be positioned in a duct 80 connected to the room space of the electric vehicle together with the indoor heat exchanger 14 described before, and the controller 70 may control such that the heating is performed with the supplementary indoor heat exchanger 33 and the indoor heat exchanger 14 in general heating.

The duct 80 has a room air suction hole 81 and a room air discharge hole 82 in communication with the room space such that the air introduced to the room air suction hole 81 is heated in a course passing through the supplementary indoor heat exchanger 33 and the indoor heat exchanger 14 and is discharged to the room space again.

In the meantime, the discharged heat recovery unit 30 may include a flow passage change-over valve (Not shown) for making the working fluid to flow to the supplementary indoor heat exchanger 33 in general heating, and to the refrigerant heater 40 in the defrosting operation. The flow passage change-over valve may be a four-way valve.

Therefore, the controller 70 may improve heating performance by controlling the first and second refrigerant flow passage controllers 50 and 60 such that the first and second outdoor heat exchangers 11 and 12 are operated as evaporators in a general heating operation and, at the same time with this, by heating the room space with the supplementary indoor heat exchanger 33.

Different from this, the controller 70 may improve heating efficiency of the air conditioning unit 10 by lowering the heating load of the compressor in the air conditioning unit 10 and compensating for a lost portion with the supplementary indoor heat exchanger 33.

And, once the first outdoor heat exchanger 11 is put into the defrosting operation, the controller 70 may control the first refrigerant flow passage controller 50 to make the first outdoor heat exchanger 11 to operate as a condenser, and controls the second refrigerant flow passage controller 60 to make the second outdoor heat exchanger 12 to operate as an evaporator for the continuous heating, and, at the same time with this, changes-over a flow of the working fluid of the discharged heat recovery unit 30 to heat the refrigerant with the discharged heat from the discharged heat recovery unit 30 for enhancing the heating performance.

In detail, in general heating operation, the controller 70 may control the flow passage change-over valve to introduce the working fluid from the discharged heat recovery unit 30 to the supplementary indoor heat exchanger 33, and, in defrosting operation, the controller 70 may control the flow passage change-over valve to introduce the working fluid from the discharged heat recovery unit 30 to the refrigerant heater 40.

Accordingly, the heating efficiency and heating performance of the air conditioner 1 can be enhanced, and a battery use time period can be increased.

Different from this, referring to FIG. 7, the discharged heat recovery unit 30 may include a supplementary outdoor heat exchanger 34 connected to make the working fluid having the discharged heat recovered from the heat generation source 31 to flow therethrough. The supplementary outdoor heat exchanger 34 may be positioned on an outdoor air suction side or an outdoor air discharge side of the outdoor heat exchangers 11 and 12. For an example, the supplementary outdoor heat exchanger 34 may be arranged in front of or in rear of the outdoor heat exchangers 11 and 12.

In general heating operation, the controller 70 may elevate a temperature of the outdoor air being introduced to the outdoor heat exchangers 11 and 12 through the supplementary outdoor heat exchanger 34, or, in defrosting operation of one of the outdoor heat exchangers 11 and 12, the controller may elevate a surrounding air temperature of the outdoor heat exchanger of which defrosting operation is being in progress with the supplementary outdoor heat exchanger 34. If the working fluid flows to the supplementary outdoor heat exchanger 34, formation of the frost can be delayed to delay the defrosting operation starting time or to shorten a defrosting operation time period.

And, as described before, the controller 70 may control the first refrigerant flow passage controller 50 to the first outdoor heat exchanger 11 as a condenser if the first outdoor heat exchanger 11 is put into the defrosting operation, and the second refrigerant flow passage controller 60 to the second outdoor heat exchanger 12 as an evaporator for making continuous heating, and, at the same time with this, may changes-over a flow of the working fluid of the discharged heat recovery unit 30 to heat the refrigerant with the discharged heat of the discharged heat recovery unit 30 for enhancing the heating performance.

And, the discharged heat recovery unit 30 may include a flow passage change-over valve which can make the working fluid to be introduced to the refrigerant heater 40 or to the supplementary outdoor heat exchanger 34, selectively. The flow passage change-over valve may be a four-way valve.

As one mode of the embodiment, in general heating operation, the controller 70 may control the flow passage change-over valve to make the working fluid to be introduced from the discharged heat recovery unit 30 to the supplementary outdoor heat exchanger 34, and, in defrosting operation, the controller 70 may control the flow passage change-over valve to make the working fluid to be introduced to the refrigerant heater 40 from the discharged heat recovery unit 30.

Therefore, the heating efficiency and heating performance of the air conditioner 1 can be enhanced, and a time period of use of the battery can be increased.

And, the discharged heat recovery unit 30 may include the supplementary outdoor heat exchanger 34 and the supplementary indoor heat exchanger 33, and the heat generation source 31, the supplementary outdoor heat exchanger 34, the supplementary indoor heat exchanger 33, and the pump 32 in the discharged heat recovery unit 30 may construe one cycle.

In this instance, the supplementary indoor heat exchanger 33 may perform a function of providing supplementary heating heat for heating the room space with the discharged heat recovered from the heat generation source 31, and supplementary outdoor heat exchanger 34 may perform a function of discharging heat from the battery 31-1, the motor 31-5 and so on.

In the general heating, the controller 70 may control to perform heating with the supplementary indoor heat exchanger 33 and the indoor heat exchanger 14, and to make the battery and so on to discharge heat through the supplementary outdoor heat exchanger 34.

As described before, the supplementary outdoor heat exchanger 34 may be positioned on the outdoor air suction side or the outdoor air discharge side of the outdoor heat exchangers 11 and 12, when, in defrosting operation, the controller 70 may heat the room space with the supplementary indoor heat exchanger 33, and may elevate a surrounding air temperature of the outdoor heat exchanger of which defrosting operation is performed with the supplementary outdoor heat exchanger 34 for shortening the defrosting operation time period.

In the meantime, the controller 70 may control the first and second refrigerant flow passage controllers to operate the first and second outdoor heat exchangers 11 and 12 at the same condition according to the outdoor temperature and a heating load, and, as one mode of the embodiment, in heating operation, the controller 70 may control both the first outdoor heat exchanger 11 and the second outdoor heat exchanger 12 to be operated as evaporators, and, in cooling operation, the controller 70 may control both the first outdoor heat exchanger 11 and the second outdoor heat exchanger 12 to be operated as condensers.

And, in heating operation, the controller 70 may control the first and second refrigerant flow passage controllers 50 and 60 to make only one, or all, of a plurality of the outdoor heat exchangers is operated according to the remained state of charge in the battery.

FIG. 8 illustrates a block diagram of an air conditioner in an electric vehicle related to a second preferred embodiment of the present invention.

Referring to FIG. 8, the air conditioner 1 related to the second embodiment has a position of the refrigerant heater 70 different from the refrigerant heater 40 in the first embodiment. And, other configuration is identical except the position of the refrigerant heater 70, and detailed description of the identical configuration will be omitted.

Though the first embodiment suggests providing the refrigerant heater 40 at a position for heating the refrigerant being introduced to the compressor 13 in defrosting operation, the embodiment suggests providing the refrigerant heater 70 between the indoor heat exchanger 14 and the outdoor heat exchangers 11 and 12 for heating the refrigerant being introduced to the outdoor heat exchangers 11 and 12 in defrosting operation.

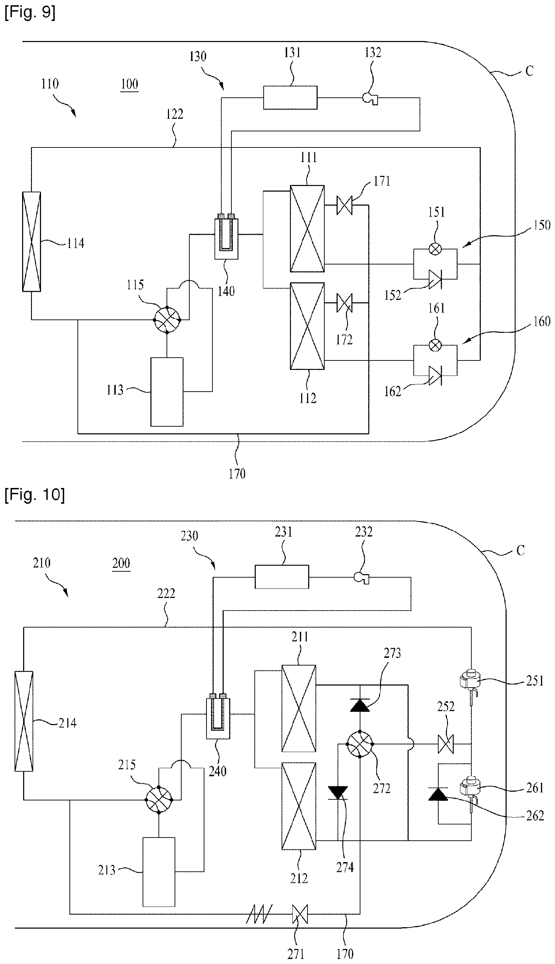

FIG. 9 illustrates a block diagram of an air conditioner 100 in an electric vehicle related to a third preferred embodiment of the present invention, and FIG. 10 illustrates a block diagram of an air conditioner 200 in an electric vehicle related to a fourth preferred embodiment of the present invention.

The air conditioner 100 or 200 in accordance with the third or fourth embodiment has a configuration similar to a configuration of the air conditioner 1 described in the first embodiment, with only difference in configurations of the first refrigerant flow passage controller and the second refrigerant flow passage controller.

That is, the third or the fourth embodiment is identical to the first embodiment in that, if the first outdoor heat exchanger 111 or 211 is put into defrosting operation, the refrigerant passed through the indoor heat exchanger 114 or 214 is made not to be introduced to the first outdoor heat exchanger 111 or 211, controlled such that the first outdoor heat exchanger 111 or 211 is defrosted in a course the first outdoor heat exchanger 111 or 211 is operated as an evaporator, and it is enabled that the refrigerant passed through the indoor heat exchanger is introduced to the second outdoor heat exchanger 112 or 212 for making continuous heating.

However, positions and a number of the valves and the pipelines on which the valves are mounted are different from the first embodiment.

In the meantime, the discharged heat recovery unit 130 or 230 is identical to the discharged heat recovery unit 30 described in the first embodiment. In detail, the refrigerant being introduced to the outdoor heat exchanger from the refrigerant heater 140 or 240 may be heated or the refrigerant being introduced to the compressor 113 or 213 may be heated with the discharged heat from the discharged heat recovery unit 130 or 230.

And, the discharged heat recovery unit 130 or 230 may include a supplementary indoor heat exchanger (Not shown) and a supplementary outdoor heat exchanger (Not shown). In detail, a heat generation source 131 or 231, the supplementary outdoor heat exchanger, the supplementary indoor heat exchanger, and a pump 132 or 232 in the discharged heat recovery unit 130 or 230 may construe one cycle.

In this instance, the supplementary indoor heat exchanger performs a function of providing supplementary heating heat for heating the room space with the discharged heat recovered from the heat generation source, and the supplementary outdoor heat exchanger performs a function of discharging heat from the battery and so on.

In general heating, the controller may control to perform heating with the supplementary indoor heat exchanger and the indoor heat exchanger, and to have the battery and so on to discharge the heat through the supplementary outdoor heat exchanger.

As described before, the supplementary outdoor heat exchanger may be positioned on an outdoor air suction side or an outdoor air discharge side of the outdoor heat exchanger, when the controller may heat the room space with the supplementary indoor heat exchanger in defrosting operation, and may elevate a surrounding air temperature of the outdoor heat exchanger of which defrosting operation is being performed with the supplementary outdoor heat exchanger for shortening a defrosting operation time period.

The third and fourth embodiments will be described centered on differences from the first embodiment with reference to the attached drawings, in detail.

Referring to FIG. 9, the air conditioner 100 includes a bypass pipeline 170 connected between the compressor 113 and each of the outdoor heat exchangers 111 and 112, and a plurality of valves 171 provided to the by pass pipeline 170, additionally. In defrosting operation, the controller may make a portion of the refrigerant discharged from the compressor 113 to be introduced to the outdoor heat exchanger which is put into defrosting operation, and the other portion of the refrigerant to be introduced to the indoor heat exchanger and the outdoor heat exchanger which performs the heating operation.

In detail, the by pass pipeline 170 has the first valve 171 provided thereto for controlling the refrigerant being introduced to the first outdoor heat exchanger 111, and a second valve 172 provided thereto for controlling the refrigerant being introduced to the second outdoor heat exchanger 112.

And, there may be a first expansion valve 151 and a first check valve 152 provided in parallel between the indoor heat exchanger 114 and the first outdoor heat exchanger 111, and the first expansion valve 151 and the first check valve 152 may construe a first refrigerant flow passage controller 150.

And, there may be a second expansion valve 161 and a second check vale 162 provided in parallel between the indoor heat exchanger 114 and the second outdoor heat exchanger 112, and the second expansion valve 161 and the second check vale 162 may construe a second refrigerant flow passage controller 160.

If the first outdoor heat exchanger 111 is put into defrosting operation, a portion of the refrigerant compressed at the compressor 113 may be introduced to the first outdoor heat exchanger 111 along the bypass pipeline 170, when the controller opens the first valve 171 and closes the second valve 172 for defrosting the first outdoor heat exchanger 111.

And, the other portion of the refrigerant discharged from the compressor 113 and passed through the first outdoor heat exchanger 111 is introduced only to the second outdoor heat exchanger 112 for making continuous heating with the second outdoor heat exchanger 112.

In this instance, the controller controls to close the first expansion valve 151, and to adjust opening of the second expansion valve 161 so that the other portion of the refrigerant passed through the indoor heat exchanger 114 is, not to be introduced to the first outdoor heat exchanger 111, but to be introduced to, and to vaporize at, the second outdoor heat exchanger 112.

Referring to FIG. 10, the air conditioner 200 includes a bypass line 270 connected between the compressor 213 and each of the outdoor heat exchangers 211 and 212, and a plurality of valves 271 to 274 provided to the bypass pipeline 270 additionally, and, in defrosting operation, the controller may make a portion of the refrigerant discharged from the compressor 213 to flow to the outdoor heat exchanger of which defrosting operation is starting, and the other portion of the refrigerant to flow to the indoor heat exchanger and the outdoor heat exchanger which performs the heating.

In detail, a first check valve 273 is provided to the bypass line 270 between the first outdoor heat exchanger 211 and a four way valve 272, and a second check valve 274 is provided between the second outdoor heat exchanger 212 and the four way valve 272, and the four way valve 272 is provided at a branch point of the first check valve 273 and the second check valve 274. And, the bypass pipeline 270 has a first valve 271 which is opened only in the defrosting operation provided thereto.

That is, if the first valve 271 is opened, a portion of the refrigerant compressed at the compressor 213 flows along the bypass line 270, and may be introduced to the first outdoor heat exchanger 211 or the second outdoor heat exchanger 212 by the four way valve 272.

In this instance, if the refrigerant compressed at the compressor 213 is introduced to the first outdoor heat exchanger 211 by the four way valve 272, defrosting of the first outdoor heat exchanger 211 is made, and, if the four way valve 272 makes change-over of the flow passage, the refrigerant compressed at the compressor 213 is introduced to the second outdoor heat exchanger 212, and defrosting of the second outdoor heat exchanger 212 is made.

And, a first expansion valve 251 may be provided between the indoor heat exchanger 214 and the outdoor heat exchanger 211 and 212, a second valve 252 may be provided between a first expansion valve 251 and the four way valve 272, and a second expansion valve 261 and a third check valve 262 may be provided in parallel to the second valve 252. In this instance, the refrigerant passed through the second valve 252 flows toward the four way valve 272, and may flow toward the first outdoor heat exchanger 211 or the second outdoor heat exchanger 212 according to a flow passage of the four way valve 272.

And, the refrigerant passed through the second expansion valve 261 may be connected to a pipeline having the first check valve provided thereto, and a pipeline having the second check valve 274 provided thereto.

In this instance, in defrosting operation of the first outdoor heat exchanger 211, by the four way valve 272, a portion of the refrigerant compressed at the compressor 213 is introduced to the first outdoor heat exchanger 211, and the refrigerant passed through the indoor heat exchanger 214 is introduced to the second outdoor heat exchanger 212. In defrosting operation of the second outdoor heat exchanger 212, by the four way valve 272, a portion of the refrigerant compressed at the compressor 213 is introduced to the second outdoor heat exchanger 212, and the refrigerant passed through the indoor heat exchanger 214 is introduced to the first outdoor heat exchanger 211.

Though a case has been described, in which the outdoor heat exchanger is defrosted, dividing the outdoor heat exchanger into the first and second outdoor heat exchangers 11 and 12, the present is not limited to this, but it is apparent that the outdoor heat exchanger may be divided into a larger number of outdoor heat exchangers.

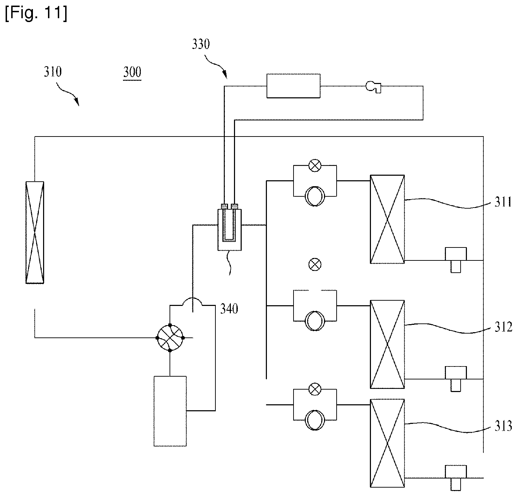

FIG. 11 illustrates a block diagram of an air conditioner in an electric vehicle related to a fifth preferred embodiment of the present invention.

Referring to FIG. 11, the air conditioner 300 may include an air conditioning unit 310 having first to third outdoor heat exchangers 311 to 313 connected to an indoor heat exchanger in parallel, and a discharged heat recovery unit 330 including heat generation sources, such as a motor, and so on.

The air conditioning unit 310 is identical to the air conditioning unit 10 described in the first embodiment except that the outdoor heat exchanger is divided into three outdoor heat exchangers.

And, the discharged heat recovery unit 330 is identical to the discharged heat recovery unit 30 described in the first embodiment.

As one mode of the embodiment, the air conditioner 300 can make continuous heating operation by using the first and second outdoor heat exchangers 311 and 312 in defrosting operation of the third outdoor heat exchanger 313.

As has been described, the air conditioner in an electric vehicle related to a preferred embodiment of the present invention can make continuous heating operation even in defrosting operation.

And, the air conditioner in an electric vehicle related to a preferred embodiment of the present invention can recover the heat discharged from various components of the electric vehicle even in defrosting operation for preventing liquid refrigerant from being introduced to the compressor.

And, the air conditioner in an electric vehicle related to a preferred embodiment of the present invention can enhance heating efficiency and performance in defrosting operation.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. An air conditioner in an electric vehicle having a battery and a driving unit comprising:
a compressor (13, 113, 213) for compressing refrigerant;
an indoor heat exchanger (14, 114, 214) for introducing the refrigerant thereto from the compressor in heating operation;
first and second outdoor heat exchangers (11, 111, 211; 12, 112, 212) connected to the indoor heat exchanger; and
first and second refrigerant flow passage controllers (50, 60) provided between the indoor heat exchanger and each of the outdoor heat exchangers,
**characterized in that** the air conditioner in an electric vehicle further comprises a controller (70) for making defrosting operation of the first outdoor heat exchanger if the first outdoor heat exchanger (11, 111, 211) meets at least one of defrosting operation starting conditions of an outdoor temperature, and refrigerant temperatures at an inlet and an outlet of the outdoor heat exchanger in the heating operation, and controlling the first and second refrigerant flow passage controllers for making the refrigerant passed through the indoor heat exchanger (14, 114, 214) to be introduced only to the second outdoor heat exchanger (12, 112, 212) according to a state of remained charge of the battery or the outdoor temperature.

2. The air conditioner as claimed in claim 1, wherein the controller (70) finishes the defrosting operation of the first outdoor heat exchanger (11, 111, 211) if the refrigerant temperature at the outlet of the first outdoor heat exchanger (11, 111, 211) of which defrosting operation is being performed is higher than a set temperature.

3. The air conditioner as claimed in claim 2, wherein the controller (70) performs defrosting of the second outdoor heat exchanger (12, 112, 212) in succession if the defrosting operation of the first outdoor heat exchanger (11, 111, 211) is finished, and controls the first and second refrigerant flow passage controllers (50, 60) for making the refrigerant passed through the indoor heat exchanger (14, 114, 214) to be introduced only to the first outdoor heat exchanger (11, 111, 211) according to the state of remained charge of the battery or the outdoor temperature.

4. The air conditioner as claimed in claim 2, wherein the controller (70) controls the first and second refrigerant flow passage controllers (50, 60) for controlling flow rates of the refrigerant being introduced to the first and second outdoor heat exchangers (11, 111, 211; 12, 112, 212) according to the state of remained charge of the battery or the outdoor temperature, if the second outdoor heat exchanger (12, 112, 212) does not meet the defrosting operation starting condition after finishing the defrosting operation of the first outdoor heat exchanger.

5. The air conditioner as claimed in claim 1, further comprising a discharged heat recovery unit (30, 130, 230) having a working fluid for circulating at least one of heat generation sources of the battery and a motor to recover discharged heat from the heat generation source.

6. The air conditioner as claimed in claim 5, further comprising a refrigerant heater (43) for heating the refrigerant with the discharged heat of the discharged heat recovery unit (30, 130, 230), wherein the refrigerant heater (43) heats the refrigerant being introduced to the compressor in the defrosting operation, or the refrigerant being introduced to the outdoor heat exchanger.

7. The air conditioner as claimed in claim 5, wherein the discharged heat recovery unit (30, 130, 230) includes a supplementary indoor heat exchanger (33) and a supplementary outdoor heat exchanger (34) connected to make the working fluid having the discharged heat recovered from the heat generation sources to flow therethrough, and the controller (70) controls to perform heating with the supplementary indoor heat exchanger (33) and the indoor heat exchanger (14, 114, 214) in general heating operation, and to have the battery to discharge heat through the supplementary outdoor heat exchanger (34).

8. The air conditioner as claimed in claim 7, wherein the supplementary outdoor heat exchanger (34) is positioned at an outdoor air suction side or an outdoor air discharge side of the outdoor heat exchanger.

9. The air conditioner as claimed in claim 8, wherein, in defrosting operation, the controller (70) heats the room space with the supplementary indoor heat exchanger (33), and elevates a surrounding air temperature of the outdoor heat exchanger of which defrosting operation is performed with the supplementary outdoor heat exchanger (34) for shortening a defrosting operation time period.

10. The air conditioner as claimed in claim 1 or 6, further comprising a bypass pipeline (170, 270) connected between the compressor and each of the outdoor heat exchangers, and a plurality of valves (171, 172; 271, 272, 283, 274) provided to the bypass pipeline, and,
in defrosting operation, the controller (70) makes a portion of the refrigerant discharged from the compressor to be introduced to the outdoor heat exchanger which is put into defrosting operation, and the other portion of the refrigerant to be introduced to the indoor heat exchanger and the outdoor heat exchanger which performs the heating operation.

11. The air conditioner as claimed in claim 1, wherein the controller (70) controls the first and second refrigerant flow passage controllers (50, 60) to operate the first and second outdoor heat exchangers (11, 111, 211; 12, 112, 212) at the same condition according to the outdoor temperature and a heating load.

12. The air conditioner as claimed in claim 1, wherein, in the heating operation, the controller (70) controls the first and second refrigerant flow passage controllers (50, 60) to make only one, or all, of a plurality of the outdoor heat exchangers (11, 111, 211; 12, 112, 212) is operated according to the remained state of charge in the battery.

13. The air conditioner as claimed in claim 1, wherein the first refrigerant flow passage controller (50) includes a first electronic expansion valve (16) provided between the first outdoor heat exchanger (11) and the indoor heat exchanger (14),
the second refrigerant flow passage controller (60) includes a second electronic expansion valve (16) provided between the second outdoor heat exchanger (12) and the indoor heat exchanger (14), and the controller opens the first electronic expansion valve, and controls opening of the second electronic expansion valve, if the first outdoor heat exchanger meets the defrosting operation starting condition.

## Patentansprüche

1. Klimaanlage in einem Elektrofahrzeug, das eine Batterie und eine Antriebseinheit aufweist, mit:
einem Verdichter (13, 113, 213) zum Verdichten eines Kältemittels;
einem Innenwärmetauscher (14, 114, 214), um darin in einem Heizbetrieb das Kältemittel aus dem Verdichter einzuleiten;
einem ersten und zweiten Außenwärmetauscher (11, 111, 211; 12, 112, 212), die mit dem Innenwärmetauscher verbunden sind; und
eine erste und zweite Kältemitteldurchflusskanal-Steuereinrichtung (50, 60), die zwischen dem Innenwärmetauscher und jeweils den Außenwärmetauschern vorgesehen sind,
**dadurch gekennzeichnet, dass** die Klimaanlage in einem Elektrofahrzeug ferner eine Steuereinrichtung (70) aufweist, um einen Entfrostungsbetrieb des ersten Außenwärmetauschers zu veranlassen, wenn der erste Außenwärmetauscher (11, 111, 211) mindestens eine der Entfrostungsbetriebsstartbedingungen einer Außentemperatur und von Kältemitteltemperaturen an einem Einlass und einem Auslass des Außenwärmetauschers im Heizbetrieb erfüllt, und um die erste und zweite Kältemitteldurchflusskanal-Steuereinrichtung zu steuern, um zu veranlassen, dass das durch den Innenwärmetauscher (14, 114, 214) gegangene Kältemittel nur in den zweiten Außenwärmetauscher (12, 112, 212) eingeleitet wird, gemäß einem Zustand der verbleibenden Ladung der Batterie oder der Außentemperatur.

2. Klimaanlage nach Anspruch 1, wobei die Steuereinrichtung (70) den Entfrostungsbetrieb des ersten Außenwärmetauschers (11, 111, 211) beendet, wenn die Kältemitteltemperatur am Auslass des ersten Außenwärmetauschers (11, 111, 211), dessen Entfrostungsbetrieb durchgeführt wird, höher als eine festgelegte Temperatur ist.

3. Klimaanlage nach Anspruch 2, wobei die Steuereinrichtung (70) in Folge das Entfrosten des zweiten Außenwärmetauschers (12, 112, 212) durchführt, wenn der Entfrostungsbetrieb des ersten Außenwärmetauschers (11, 111, 211) beendet ist, und die erste und zweite Kältemitteldurchflusskanal-Steuereinrichtung (50, 60) steuert, um zu veranlassen, dass das durch den Innenwärmetauscher (14, 114, 214) gegangene Kältemittel nur in den ersten Außenwärmetauscher (11, 111, 211) eingeleitet wird, gemäß dem Zustand der verbleibenden Ladung der Batterie oder der Außentemperatur.

4. Klimaanlage nach Anspruch 2, wobei die Steuereinrichtung (70) die erste und zweite Kältemitteldurchflusskanal-Steuereinrichtung (50, 60) zum Steuern der Durchflussgeschwindigkeiten des Kältemittels steuert, das in den ersten und zweiten Außenwärmetauscher (11, 111, 211; 12, 112, 212) eingeleitet wird, gemäß dem Zustand der verbleibenden Ladung der Batterie oder der Außentemperatur, wenn der zweite Außenwärmetauscher (12, 112, 212) die Entfrostungsbetriebsstartbedingung nach dem Beenden des Entfrostungsbetriebs des ersten Außenwärmetauschers nicht erfüllt.

5. Klimaanlage nach Anspruch 1, die ferner eine Einheit (30, 130, 230) zur Rückgewinnung abgegebener Wärme aufweist, die ein Arbeitsfluid zum Umwälzen von mindestens einer der Wärmeerzeugungsquellen der Batterie und eines Motors aufweist, um abgegebene Wärme zurückzugewinnen, die von der Wärmeerzeugungsquelle abgegeben wird.

6. Klimaanlage nach Anspruch 5, die ferner einen Kältemittelheizer (43) zum Erwärmen des Kältemittels mit der abgegebenen Wärme der Einheit (30, 130, 230) zur Rückgewinnung abgegebener Wärme aufweist, wobei der Kältemittelheizer (43) das Kältemittel, das im Entfrostungsbetrieb in den Verdichter eingeleitet wird, oder das Kältemittel erwärmt, das in den Außenwärmetauscher eingeleitet wird.

7. Klimaanlage nach Anspruch 5, wobei die Einheit (30, 130, 230) zur Rückgewinnung abgegebener Wärme einen Zusatzinnenwärmetauscher (33) und einen Zusatzaußenwärmetauscher (34) aufweist, die so verbunden sind, dass sie das Arbeitsfluid veranlassen, das die aus den Wärmeerzeugungsquellen zurückgewonnene abgegebene Wärme aufweist, dort hindurch zu fließen, und die Steuereinrichtung (70) so steuert, dass im allgemeinen Heizbetrieb eine Heizung mit dem Zusatzinnenwärmetauscher (33) und dem Innenwärmetauscher (14, 114, 214) durchgeführt wird, und die Batterie veranlasst wird, Wärme durch den Zusatzaußenwärmetauscher (34) abzugeben.

8. Klimaanlage nach Anspruch 7, wobei der Zusatzaußenwärmetauscher (34) auf einer Außenluftansaugseite oder einer Außenluftausstoßseite des Außenwärmetauschers angeordnet ist.

9. Klimaanlage nach Anspruch 8, wobei im Entfrostungsbetrieb die Steuereinrichtung (70) den Raum mit dem Zusatzinnenwärmetauscher (33) erwärmt, und eine Umgebungslufttemperatur des Außenwärmetauschers, bei dem der Entfrostungsbetrieb durchgeführt wird, mit dem Zusatzaußenwärmetauscher (34) zum Verkürzen einer Entfrostungsbetriebszeitspanne erhöht.

10. Klimaanlage nach Anspruch 1 oder 6, die ferner eine Umgehungsleitung (170, 270), die zwischen den Verdichter und jeweils die Außenwärmetauscher geschaltet ist, und eine Vielzahl von Ventilen (171, 172; 271, 272, 283, 274) aufweist, die in der Umgehungsleitung vorgesehen sind, und
die Steuereinrichtung (70) im Entfrostungsbetrieb veranlasst, dass ein Anteil des aus dem Verdichter ausgestoßenen Kältemittels in den Außenwärmetauscher eingeleitet wird, der in den Entfrostungsbetrieb versetzt ist, und der andere Anteil des Kältemittels in den Innenwärmetauscher und den Außenwärmetauscher eingeleitet wird, der den Heizbetrieb ausführt.

11. Klimaanlage nach Anspruch 1, wobei die Steuereinrichtung (70) die erste und zweite Kältemitteldurchflusskanal-Steuereinrichtung (50, 60) steuert, den ersten und zweiten Außenwärmetauscher (11, 111, 211; 12, 112, 212) gemäß der Außentemperatur und einer Heizlast unter derselben Bedingung zu betreiben.

12. Klimaanlage nach Anspruch 1, wobei im Heizbetrieb die Steuereinrichtung (70) die erste und zweite Kältemitteldurchflusskanal-Steuereinrichtung (50, 60) so steuert, dass sie bewirken, dass nur einer oder alle einer Vielzahl der Außenwärmetauscher (11, 111, 211; 12, 112, 212) gemäß dem Zustand der verbleibenden Ladung der Batterie betrieben werden.

13. Klimaanlage nach Anspruch 1, wobei die erste Kältemitteldurchflusskanal-Steuereinrichtung (50) ein erstes elektronisches Expansionsventil (16) aufweist, das zwischen dem ersten Außenwärmetauscher (11) und dem Innenwärmetauscher (14) vorgesehen ist,
die zweite Kältemitteldurchflusskanal-Steuereinrichtung (60) ein zweites elektronisches Expansionsventil (16) aufweist, das zwischen dem zweiten Außenwärmetauscher (12) und dem Innenwärmetauscher (14) vorgesehen ist, und die Steuereinrichtung das erste elektronische Expansionsventil öffnet, und das Öffnen des zweiten elektronischen Expansionsventils steuert, wenn der erste Außenwärmetauscher die Entfrostungsbetriebsstartbedingung erfüllt.

## Revendications

1. Climatiseur de véhicule électrique pourvu d'une batterie et d'une unité d'entraînement, comprenant :
un compresseur (13, 113, 213) destiné à comprimer un réfrigérant ;
un échangeur de chaleur intérieur (14, 114, 214) destiné à recevoir le réfrigérant du compresseur lors d'un fonctionnement de chauffage ;
un premier et un deuxième échangeurs de chaleur extérieurs (11, 111, 211 ; 12, 112, 212) reliés à l'échangeur de chaleur intérieur ; et
un premier et un deuxième dispositifs de commande de passage de flux de réfrigérant (50, 60) prévus entre l'échangeur de chaleur intérieur et chaque échangeur de chaleur extérieur,
**caractérisé en ce que** ledit climatiseur de véhicule électrique comprend en outre un dispositif de commande (70) pour l'exécution d'un fonctionnement de dégivrage du premier échangeur de chaleur extérieur si le premier échangeur de chaleur extérieur (11, 111, 211) satisfait à au moins une des conditions de déclenchement d'un fonctionnement de dégivrage que sont une température extérieure, et des températures de réfrigérant à une entrée et à une sortie de l'échangeur de chaleur extérieur lors du fonctionnement de chauffage, et commander le premier et le deuxième dispositifs de commande de passage de flux de réfrigérant pour que le réfrigérant ayant traversé l'échangeur de chaleur intérieur (14, 114, 214) ne soit introduit que dans le deuxième échangeur de chaleur extérieur (12, 112, 212) en fonction d'un état de charge résiduelle de la batterie ou de la température extérieure.

2. Climatiseur selon la revendication 1, où le dispositif de commande (70) arrête le fonctionnement de dégivrage du premier échangeur de chaleur extérieur (11, 111, 211) si la température de réfrigérant à la sortie du premier échangeur de chaleur extérieur (11, 111, 211) dont le fonctionnement de dégivrage est en cours d'exécution est supérieure à une température définie.

3. Climatiseur selon la revendication 2, où le dispositif de commande (70) exécute consécutivement le dégivrage du deuxième échangeur de chaleur extérieur (12, 112, 212) si le fonctionnement de dégivrage du premier échangeur de chaleur extérieur (11, 111, 211) est terminé, et commande le premier et le deuxième dispositifs de commande de passage de flux de réfrigérant (50, 60) pour que le réfrigérant ayant traversé l'échangeur de chaleur intérieur (14, 114, 214) ne soit introduit que dans le premier échangeur de chaleur extérieur (11, 111, 211) en fonction de l'état de charge résiduelle de la batterie ou de la température extérieure.

4. Climatiseur selon la revendication 2, où le dispositif de commande (70) contrôle le premier et le deuxième dispositifs de commande de passage de flux de réfrigérant (50, 60) pour la commande de débits du réfrigérant introduits dans le premier et le deuxième échangeurs de chaleur extérieurs (11, 111, 211 ; 12, 112, 212) en fonction de l'état de charge résiduelle de la batterie ou de la température extérieure, si le deuxième échangeur de chaleur extérieur (12, 112, 212) ne satisfait pas à la condition de déclenchement du fonctionnement de dégivrage à l'issue du fonctionnement de dégivrage du premier échangeur de chaleur extérieur.

5. Climatiseur selon la revendication 1, comprenant en outre une unité de récupération de chaleur dégagée (30, 130, 230) ayant un fluide de travail pour la circulation d'au moins une des sources de génération de chaleur de la batterie et d'un moteur afin de récupérer la chaleur dégagée par la source de génération de chaleur.

6. Climatiseur selon la revendication 5, comprenant en outre un élément chauffant de réfrigérant (43) destiné à chauffer le réfrigérant avec la chaleur dégagée de l'unité de récupération de chaleur dégagée (30, 130, 230), ledit élément chauffant de réfrigérant (43) chauffant le réfrigérant introduit dans le compresseur lors du fonctionnement de dégivrage, ou le réfrigérant introduit dans l'échangeur de chaleur extérieur.

7. Climatiseur selon la revendication 5, où l'unité de récupération de chaleur dégagée (30, 130, 230) comprend un échangeur de chaleur intérieur supplémentaire (33) et un échangeur de chaleur extérieur supplémentaire (34) connecté pour qu'y circule le fluide de travail pourvu de la chaleur dégagée récupérée des sources de génération de chaleur, et où le dispositif de commande (70) commande l'exécution d'un chauffage par l'échangeur de chaleur intérieur supplémentaire (33) et l'échangeur de chaleur intérieur (14, 114, 214) lors d'un fonctionnement de chauffage général, et le dégagement de la chaleur de la batterie par l'échangeur de chaleur extérieur supplémentaire (34).

8. Climatiseur selon la revendication 7, où l'échangeur de chaleur extérieur supplémentaire (34) est disposé sur un côté d'aspiration d'air extérieur ou un côté d'évacuation d'air extérieur de l'échangeur de chaleur extérieur.

9. Climatiseur selon la revendication 8, où, lors du fonctionnement de dégivrage, le dispositif de commande (70) chauffe l'espace intérieur par l'échangeur de chaleur intérieur supplémentaire (33), et élève une température d'air ambiant de l'échangeur de chaleur extérieur sur lequel le fonctionnement de dégivrage est exécuté par l'échangeur de chaleur extérieur supplémentaire (34) pour raccourcir la durée du fonctionnement de dégivrage.

10. Climatiseur selon la revendication 1 ou la revendication 6, comprenant en outre un conduit de dérivation (170, 270) entre le compresseur et chacun des échangeurs de chaleur extérieurs, et une pluralité de vannes (171, 172 ; 271, 272, 283, 274) prévues sur le conduit de dérivation, et où,
lors du fonctionnement de dégivrage, le dispositif de commande (70) fait qu'une partie du réfrigérant refoulé par le compresseur est introduite dans l'échangeur de chaleur extérieur mis en fonctionnement de dégivrage, et que l'autre partie du réfrigérant est introduite dans l'échangeur de chaleur intérieur et l'échangeur de chaleur extérieur exécutant le fonctionnement de chauffage.

11. Climatiseur selon la revendication 1, où le dispositif de commande (70) commande le premier et le deuxième dispositifs de commande de passage de flux de réfrigérant (50, 60) pour mettre en service le premier et le deuxième échangeurs de chaleur extérieurs (11, 111, 211 ; 12, 112, 212) dans le même état en fonction de la température extérieure et d'une charge de chauffage.

12. Climatiseur selon la revendication 1, où, in le fonctionnement de chauffage, le dispositif de commande (70) commande le premier et le deuxième dispositifs de commande de passage de flux de réfrigérant (50, 60) pour ne mettre en service qu'un seul échangeur, ou tous les échangeurs d'une pluralité d'échangeurs de chaleur extérieurs (11, 111,211 ; 12, 112, 212) en fonction de l'état de charge résiduelle de la batterie.

13. Climatiseur selon la revendication 1, où le premier dispositif de commande de passage de flux de réfrigérant (50) comprend une première vanne électronique de détente (16) prévue entre le premier échangeur de chaleur extérieur (11) et l'échangeur de chaleur intérieur (14),
le deuxième dispositif de commande de passage de flux de réfrigérant (60) comprend une deuxième vanne électronique de détente (16) prévue entre le deuxième échangeur de chaleur extérieur (12) et l'échangeur de chaleur intérieur (14), et le dispositif de commande ouvre la première vanne électronique de détente, et commande l'ouverture de la deuxième vanne électronique de détente, si le premier échangeur de chaleur extérieur satisfait à la condition de déclenchement du fonctionnement de dégivrage.
